Europäisches Patentamt

European Patent Office

Office européen des brevets

(19)

(11) Publication number: **0 121 025 B1**

# EUROPEAN PATENT SPECIFICATION

(12)

(45) Date of publication of patent specification: **11.03.92**   (51) Int. Cl.⁵: **G05F 3/20**, H02J 7/10

(21) Application number: **83307393.5**

(22) Date of filing: **06.12.83**

(54) **Current regulating circuit.**

(30) Priority: **07.03.83 US 472758**
**18.08.83 US 524357**

(43) Date of publication of application:
**10.10.84 Bulletin 84/41**

(45) Publication of the grant of the patent:
**11.03.92 Bulletin 92/11**

(84) Designated Contracting States:
**AT BE CH DE FR GB IT LI LU NL SE**

(56) References cited:
**US-A- 3 943 423**
**US-A- 3 970 912**

(73) Proprietor: **Solid State Chargers Research**
**and Development Limited Partnership**
**7503 Surratts Road**
**Clinton, Maryland 20735(US)**

(72) Inventor: **Hoffman, Philip A.**
**514 Piccadilly Road**
**Towson Maryland 21204(US)**

(74) Representative: **Wombwell, Francis et al**
**Potts, Kerr & Co. 15, Hamilton Square**
**Birkenhead Merseyside L41 6BR(GB)**

## Description

The present invention relates to a current regulating circuit especially adaptable for integrated circuit manufacture, and more particularly, to a battery charging circuit that may be fabricated as a relatively small solid state component and incorporated directly in a cordless tool or appliance, thereby obviating the use of a cumbersome, bulky and expensive external charger utilizing a conventional transformer.

While not restricted thereto, this invention finds immediate application in simple, inexpensive battery charging circuits which are especially useful for charging batteries used in portable battery-operated devices such as soldering pencils, shavers, cordless telephones, calculators, computers, television sets, radios, recorders, electric garden tools, cordless hand tools including woodworking and metalworking tools, and the like. More particularly, the present invention finds direct application in battery charging circuits for cordless devices which are simple, inexpensive to make and may be readily incorporated directly into the cordless devices.

Battery-operated cordless devices, such as hand tools, have a considerable popularity because of the convenience afforded by these devices. Devices of this type are customarily provided with a small D.C. electric drive motor which is energized by one or more rechargeable batteries incorporated within the tool housing and operatively associated with the electric drive motor. When the device is a television set, radio, recorder or the like, the rechargeable batteries supply D.C. power to the circuits therein either exclusively or alternatively, in instances in which an A.C. power cord and plug are provided. The elimination of a conventional electric cord or its alternative use increases the freedom with which the user of the cordless device can move about, eliminating the inconveniences of clearing the power cord from obstacles with which it may otherwise become entangled and reducing the necessity of having electric wall outlets available at every place the device is to be used. It has become customary to provide cordless devices, such as cordless garden tools and woodworking tools with rechargeable batteries so as to avoid the necessity of frequent battery replacements, and to reduce the cost of operation. The present day rechargeable batteries, properly maintained with a special charge, have an extended life and greatly enhanced convenience with which the cordless device may be operated.

Most cordless devices, such as cordless hand tools and the like, operate from a D.C. battery potential of only a few volts. The prior art has resorted to recharging the batteries from a conventional 117 volt, 60 Hz electrical outlet through voltage stepped-down transformers which necessarily are of considerable size and consequently increase the size, cost and weight of the battery charger. Different outlet voltage levels and/or supply frequencies are also encountered. The size and weight of the battery charger, and particularly the contribution to the weight by the step-down transformer, has made it difficult to incorporate a charging circuit directly into cordless devices and to make such a charger inexpensively. Moreover, the handling, storage and packaging of battery chargers involving transformers result in serious shortcomings and limitation on their use, particularly if desired to be incorporated in the cordless device itself. Moreover, the customer and user of a variety of cordless tools, appliances or devices will accumulate an equal variety of separable chargers, and some confusion may result in determining which charger is to be used with a particular cordless device.

It is known from U.S. Letters Patent no. 3,943,423 to Philip A. Hoffman entitled "Battery Charging Circuit" and issued on March 9, 1976 to provide a battery charging circuit which eliminates the need for a relatively bulky and heavy voltage step-down transformer, and which, when recharging batteries in a hand tool or the like, needs simply to be connected to a conventional, 117 volt 60 Hz household outlet and to the battery cell or cells which are to be recharged. Here again, other outlet voltage levels and/or supply frequencies can be used as well. The known charging circuit of the aforesaid Hoffman patent comprises a variable resistance switch preferably realized in the form of a NPN junction transistor and Darlington-connected other transistors operatively associated with a feedback circuit. This known circuit has, in addition to the transistors and resistors, two rectifying diodes and two capacitors, resulting in a circuit which, particularly because of the need for the capacitors and a considerable number of passive components, becomes relatively more expensive to realize as an integrated circuit than the present invention and would be somewhat bulky and more expensive to miniaturize than the present invention using other techniques for incorporation into cordless devices.

It is known from the further U.S. Letters Patent No. 3,970,912 issued on July 20, 1976 to Philip A. Hoffman and entitled "Battery Charging Circuit" to provide a battery charging circuit free of transformers and operatively arranged to produce current pulses which are supplied to the battery or batteries to be recharged via the inductance of an electric motor, which forms part of a cordless hand tool or the like. This circuit, while not requiring capacitors, does require at least two diodes and an inductance, albeit the inductance of an electric motor which is a portion of a powered hand tool or the like. As a result, this circuit has somewhat limited utility because of the requirement for an inductance, and, in particular, the inductance provided by a D.C. electric motor.

A considerable number of battery chargers have been proposed and are known from the general prior art including U.S. letters Patents identified as follows:

| Numbers | Patentees | Issue Date |
|---------|-----------|------------|
| 3,735,233 | Richard B. Ringle | May 22,1973 |
| 3,876,921 | John H.Bigbee, III | April 8,1975 |
| 4,013,934 | George J. Frye | March 22,1977 |
| 4,140,958 | Charles R. Groeschel | February 20,1979 |
| 4,158,813 | Robert W. Ellis et al | June 19,1979 |
| 4,162,439 | Arthur Schneider | July 24,1979 |
| 4,186,335 | Harold J. Cahill | January 29,1980 |
| 4,220,905 | William T.Quarton | September 2,1980 |
| 4,266,178 | Tatsushi Asakawa | May 5,1981 |
| 4,292,578 | Robert L. Steigerwald et al. | September 29,1981 |
| 4,321,523 | Ronald O. Hammel | March 23, 1982 |
| 4,348,619 | Ray et al. | September 7,1982 |

It is also known from Mims III "Engineer's Notebook A Handbook of Integrated Circuit Appications", First Edition, Second Printing, pg. 95, Radio Shack, A division of the Tandy Corporation, U.S.A. (1979) to use integrated circuits in battery charges.

The invention can be seen as being in a circuit for supplying charging current to a battery and which includes a rectifying circuit, having input and output terminals and being operatively arranged to provide an unfiltered rectified output, and a current regulating circuit connected in series with the battery and the two terminals of the rectifying circuit, and wherein the current regulating circuit includes a controlled current-carrying stage and a control stage, having a control electrode, a second electrode and a third electrode, operatively arranged to control conduction of the controlled stage in response to an input signal representative of the unfiltered rectified output from the rectifying circuit, in which the control stage includes an internal negative feedback path which includes a resistive voltage divider extending in series with the battery between the two terminals of the rectifying circuit, one point on the voltage divider is connected to the control electrode of the control stage and another point on the voltage divider is connected to the second electrode of the control stage via a resistance, and allows the controlled stage to pass current to the battery during periods when the unfiltered output from the rectifying circuit is between a first level constituted by a voltage slightly higher than the battery voltage and a higher second level and to block current to the battery during periods when the unfiltered rectified output from the rectifying circuit is greater than the higher second level, characterized by the fact that the current regulating circuit includes a positive temperature coefficient resistance through which at least a major portion of current to the battery flows via the controlled stage and which increases in value as temperature increases limiting current flow to the battery.

The resistance through which at least a major portion of current to the battery flows may serve as a fuse for fail safe operation of the circuit.

The resistance through which at least a major portion of current to the battery flows may be formed by metallization during integrated circuit manufacture or fabrication.

The current regulating circuit desirably includes a first resistance, a second resistance and a third resistance connected in series in the denominated order, the control stage including a transistor having its collector-emitter path connected in series with a series connection of a fourth resistance and having its base-emitter path connected in parallel with the first resistance. The second resistance is connected between the base of the transistor and a circuit point defined by a connection between the third resistance and the fourth resistance.

The relative sizes of the first resistance $R_1$, the second resistance $R_2$, the third resistance $R_3$ and the fourth resistance $R_4$ set out in the preceding paragraph are desirably defined as follows:

$R_1$ = $K_1$ $R_4$

$R_2$ = $K_2$ $R_4$

$R_3$ = $K_3$ $R_4$; where

$K_1 = .65 \pm .03$, $K_2 = 8.82 \pm .44$ and $K_3 = 4.00 \pm .20$.

The preferred constants of the circuit according to the preceding paragraphs are:

$K_1 = .65 \pm 0.006$, $K_2 = 8.82 \pm 0.088$ and $K_3 = 4.00 \pm 0.040$.

The current regulating circuit may include a first resistance, a second resistance and a third resistance connected in series in the denominated order, the control stage including a transistor having its collector-emitter path connected in series with a series connection of a fourth resistance and the third resistance and having its base-emitter path connected in parallel with a series connection of a fifth resistance and the first resistance, and the second resistance is connected between the base of the transistor and a circuit point between the third resistance and the fourth resistance.

The relative sizes of the first resistance $R'_1$, the second resistance $R'_2$, the third resistance $R'_3$ and the fourth resistance $R'_4$ set out in the preceding paragraph are desirably defined as follows:

$$R'_1 = K'_1 R'_4$$
$$R'_2 = K'_2 R'_4$$
$$R'_3 = K'_3 R'_4; \text{ where}$$

$K'_1 = .57 \pm .03$, $K'_2 = 7.69 \pm .38$ and $K'_3 = 4.00 \pm .20$.

The preferred constants of the circuit according to the preceding paragraphs are:

$K'_1 = .57 \pm 0.006$, $K'_2 = 7.69 \pm 0.076$ and $K'_3 = 4.00 \pm .04$.

The current regulating circuit may include a given resistance and another given resistance providing, in effect, a first resistance, a second resistance and a third resistance being connected in series in the denominated order with the first resistance, the control stage including a transistor having its collector-emitter path connected in series with a series connection of a fourth resistance and the third resistance and having its base-emitter path connected in parallel with the given resistance and in parallel with a series connection of the another given resistance, and the fifth resistance. The second resistance is connected between the base of the transistor and a circuit point between the third resistance and the fourth resistance.

The relative sizes of the first resistance $R_1$, the second resistance $R_2$, the third resistance $R_3$ and the fourth resistance $R_4$, set forth in the preceding paragraph, are desirably defined as follows:

$$R_1 = K_1 R_4$$
$$R_2 = K_2 R_4$$
$$R_3 = K_3 R_4; \text{ where}$$

$K_1 = .65 \pm .03$, $K_2 = 8.82 \pm .44$ and $K_3 = 4.00 \pm .20$.

The preferred constants of the circuit according to the preceding paragraphs are:

$K_1 = .65 \pm 0.006$, $K_2 = 8.82 \pm 0.088$ and $K_3 = 4.00 \pm 0.040$.

The controlled stage may comprise a field effect transistor.

The field effect transistor may be a MOSFET.

Fig. 1 is a perspective view of a hand tool in the form of a battery-operated grass clipper or pruning shears into which a battery charger, constructed in accordance with the present invention, may be placed.

Fig. 2 is a circuit diagram of a first embodiment of a current regulating circuit according to the present invention used in a battery charger and which may be incorporated into the housing of the hand tool illustrated in Fig. 1 and the like.

Fig. 3 is a circuit diagram of a second embodiment of a current regulating circuit according to the present invention used in a battery charger and which may be incorporated into the housing of the hand tool shown in Fig. 1 and similar devices.

Fig. 4A is a circuit diagram of a third embodiment of a current regulating circuit according to the present invention used in a battery charger and which may be incorporated into the housing of the hand tool illustrated in Fig. 1 and the like.

Fig. 4B is a circuit diagram of a variant of the third embodiment of the current regulating circuit illustrated in Fig. 4A.

Fig. 5A is a circuit diagram of a fourth embodiment of a current regulating circuit according to the present invention used in a battery charger and which may be incorporated into the housing of the hand tool illustrated in Fig. 1 and the like.

Fig. 5B is a circuit diagram of a variant of the fourth embodiment of the current regulating circuit illustrated in Fig. 5A.

Figs. 6A-6C are voltage and current waveforms at various locations in the circuits illustrated in Figs. 2, 3, 4A, 4B, 5A and 5B helpful in understanding the operation thereof.

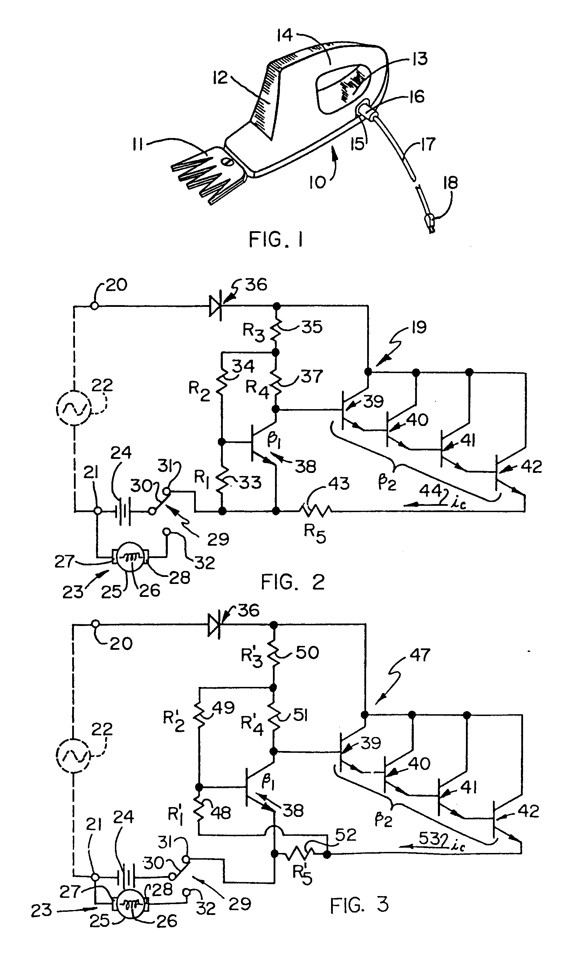

Referring to the drawings, Fig. 1 shows a cordless, battery-operated hand tool in the form of a grass clippers 10 for the purpose of illustration. The grass clippers 10 includes shearing blades 11 supported from a housing 12 which is apertured at 13 to provide an integral handle portion 14. Within the housing 12 is an electric motor (not visible) connected to drive the blades 11 and a power supply battery or batteries (not visible) in Fig. 1 for energizing the motor.

On one side of the housing 12 is a socket 15 which acts as a receptacle for a power supply plug 16 connected to one end of the power supply cord 17. The other end of the power supply cord 17 terminates a conventional dual-prong plug 18 which is to be inserted into a conventional, 117 volt, 60 Hz household power outlet. During operation, the plug 16 is removed from the socket 15; however, when the battery or batteries are to be recharged, the cord 17 is connected to the household outlet and the plug 16 is inserted into the socket 15 to recharge the battery or batteries. When charging is completed, the plug 16 is removed.

Figs. 2, 3, 4A and 4B, and 5A and 5B are respective detailed circuit diagrams of respective embodiments of battery charging circuit constructed according to the present invention and which are readily adapted to be incorporated into the housing 12 of the grass clippers 10 illustrated in Fig. 1.

As illustrated in Fig. 2, the illustrative, first embodiment of a charging circuit constructed in accordance with the present invention is generally designated by the numeral 19 and includes a pair of terminals 20, 21 which are shown, for purposes of illustration, connected across a conventional, 117 volt 60 Hz voltage source 22. Also shown in Fig. 2 is an electric motor 23 and a motor-energizing battery 24. The motor 23, may be for example, a small printed magnet electric motor having an armature 25 with inductive windings, shown generally by the numeral 26, to which electrical connections are established by motor brushes 27, 28. The battery 24 may be comprised of four conventional 1.3 volt nickle-cadmium rechargeable battery cells in series to provide a battery voltage of approximately 5.2 volts when fully charged. The battery charging circuit designated generally by the numeral 19 is connectable to the battery 24 by a single-pole, double-throw, manually operated switch 29 having a movable contact 30 for selective engagement with a stationary contact 31 which, when brought into contact with the movable contact 30 as illustrated, places the battery 24 in a recharging position. When the movable contact 30 is moved to engage its associated stationary contact 32, the battery charging circuit 19 is taken out of circuit with the battery 24, which is then in its "operate" position, the battery 24 energizing the motor 24.

The basic charging circuit 19, as illustrated in Fig. 2, can be used to charge, for example, both 2.6 volt and 5.2 volt nickle-cadmium batteries from conventional 117 volt, and 234 volt 60 Hz power sources. It is to be appreciated, however, that the charging circuit illustrated in Fig. 2 can be utilized to charge rechargeable batteries of considerably different voltage levels from sources of different levels and/or supply frequencies, the above-mentioned levels and frequencies being set out by way of example only. The battery charging circuit 19 includes, a first resistor 33 (resistance $R_1$), a second resistor 34 (resistance $R_2$), a third resistor 35 (resistance $R_3$) and a rectifying diode 36 connected between the stationary contact 31 of the switch 29 and the terminal 20 of the battery charging circuit. As illustrated, the rectifying diode 36 has its anode connected to the terminal 20 and its cathode connected to one end of the resistor 35. A fourth resistor 37 (resistance $R_4$)is connected between the connection point of the second resistor 34 and the third resistor 35 and the collector of an NPN transistor 38, which has its emitter connected to the stationary contact 31 of the manually operated switch 29 and to one end of the first resistor 33. The other end of the first resistor 33 is connected to the base of the transistor 38, as well as to one end of the second resistor 34. The transistor 38 and resistors 33, 34 35 and 37 constitute the control stage of the battery charging circuit 19. The collector of the transistor 38 is connected, in turn, to a current amplifier which includes a Darlington connected series of NPN junction transistors 39-42. The Darlington connected transistors are selected so as to provide a relatively high current gain, for example, a current gain ($\beta_2$) of approximately 200,000, while the control stage which includes the transistor 38 is selected to also have a current gain ($\beta_1$), for example, of about 100. The collectors of each of the transistors 39-42 are connected to the cathode of the rectifying diode 36. The base of the first of the transistors 39-42, that is the transistor 39 is connected to the collector of the switching transistor 38. The emitter of the final one of the Darlington-connected transistors 39-42, that is the transistor 42, is connected to the stationary contact 31 of the manually-operated switch 29 and to the emitter of the transistor 38, via a current-limiting fifth resistor 43 ($R_5$). The current-limiting fifth resistor 45 is a positive temperature coefficient (PTC) resistance, formed by metallization from materials which are selected so that this resistor will also function as a fuse, allowing circuit failure without change to the battery undergoing recharging and endangering the surroundings. The battery charging circuit 19 illustrated in Fig. 2, is not provided with external feedback between the output of the current amplifier constituted by the Darlington circuit configured transistors 39-42 and the switching transistor 38; however, internal feedback is provided by the third resistance 35 because of its coupling to the base of the transistor 38 via the second resistance 34 and the first resistance 33 connected as illustrated.

By way of example only, typical values for circuit parameters of the battery charging circuit illustrated in Fig. 2, which would be used in an exemplary integrated circuit embodiment are:

$$R_1 = 8,946 \text{ ohms}, \qquad i_a = .12 \text{ ampere (average)},$$
$$R_2 = 120,543 \text{ ohms}, \qquad i_p = 5.0 \text{ ampere (peak)},$$
$$R_3 = 54,668 \text{ ohms}, \qquad \beta_1 = 100 \text{ (current gain, control stage)},$$
$$R_4 = 13,667 \text{ ohms}, \qquad \beta_2 = 200,000 \text{ (current gain, current amplifier)}.$$
$$R_5 = .385 \text{ ohms},$$

It is to be appreciated that the individual values for the resistances $R_1$ - $R_4$ can vary considerably, as a practical matter by about ± 20 percent, the exact values for resistances $R_1$ - $R_4$ not being nearly as important as the ratios among them. The ratios of $R_1$: $R_4$, $R_2$: $R_4$ and $R_3$: $R_4$, in a practical case, should desirably be within the range of substantially ± 5 percent and preferably substantially ± 1 percent. These criteria make it possible to realize the charging circuit of Fig. 2 as an integrated circuit using diffusion techniques. It is conceived that the integrated circuit, in an exemplary practical realization can be contained within a small housing preferably of cylindrical shape and having a length of about 3/16 inch and a diameter of about 5/36 inch. Two concentric wire leads each of about one inch can be provided to extend from the housing.

Accordingly, expressing the above-mentioned ratios as constants $K_1$, $K_2$ and $K_3$, respectively, we have:

$$K_1 = 0.65 \pm 0.03 = \frac{R_1}{R_4}, \quad K_2 = 8.82 \pm 0.44 = \frac{R_2}{R_4},$$

and or, as the preferred case is,

$K_1 = 0.65 \pm 0.006$, $K_2 = 8.82 \pm 0.088$ and $K_3 = 4.00 \pm 0.04$.

The fifth resistance $R_5$ need not be in a particular ratio with respect to the other resistances and can readily be formed by metallization and be constituted by a metal contact to or between circuit points. The resistance $R_5$ is desirably a positive temperature coefficient (PTC) resistance, which increases in value as temperature increases, thus limiting current flow. The size of resistance $R_5$, relative to the sizes of resistance $R_1$ - $R_4$, is very small. The resistance $R_5$ acts to stabilize the battery charging circuit which, in a practical case, operates at a temperature of about 125°C during battery charging when the chip is provided with a suitable thermal mounting. Charging current will decrease with an increase in ambient temperature of approximately forty-five hundredths of one percent (0.45%) per degree Centigrade, roughly matching the desired change in nickle-cadmium cell charging current with temperature.

As illustrated in Fig. 3, like reference numerals designating like circuit components, the illustrative, second embodiment of a charging circuit constructed in accordance with the present invention is generally designated by the numeral 47 and includes a pair of terminals 20, 21 which are shown, for purposes of illustration, connected across a conventional, 117 volt, 60 Hz voltage source 22. Also shown in Fig. 3 is an electric motor 23 and a motor-energizing battery 24. The motor 23, may be, for example, a small permanent magnet electric motor having an armature 25 with inductive windings 26 to which electrical connections are established by motor brushes 27, 28. The battery 24 may be comprised of conventional rechargeable battery cells in series. The battery charging circuit designated generally by the numeral 47 is connectable to the battery 24 by a single-pole, double-throw, manually operated switch 29 having a movable contact 30 for selective engagement with a stationary contact 31 which, when brought into contact with the movable contact 30 as illustrated, places the battery 24 in a recharging position. When the movable contact 30 is moved to engage its associated stationary contact 32, the battery charging circuit 47 is taken out of circuit with the battery 24, which is then in its "operate" position, the battery 24 energizing the motor 24.

The basic charging circuit 47, as illustrated in Fig. 3, can be used to charge both 2.6 volt and 5.2 volt nickle-cadmium batteries from 117 volt, 60 Hz power supplies from 234 volt, 60Hz power supplies. It is to be appreciated, however, that the charging circuit illustrated in Fig. 3 can be utilized to charge rechargeable batteries of considerably different voltage levels and itself have different levels and/or supply frequency, the above-mentioned levels and frequency being set out by way of example only. The battery charging circuit 47 includes, a first resistor 48 (resistance $R'_1$), a second resistor 49 (resistance $R'_2$) and a third resistor 50 (resistance $R'_3$), which is included to provide internal feedback, in series with a rectifying diode 36 connected between the stationary contact 31 of the switch 29, via a current-limiting further resistor 52 (resistance $R'_5$) and the terminal 20 of the battery charging circuit. As illustrated, the rectifying diode 36 has its anode connected to the terminal 20 and its cathode connected to one end of the third resistor 50. A fourth resistor 51 (resistance $R'_4$) is connected between the connection of the second resistor 49 and the third resistor 50 and the collector of the NPN transistor 38, which has its emitter connected to the stationary contact 31 of the manually operated switch 29 and, via the fifth resistor 52, to one end of the first resistor 48, which has its other end connected to the base of the transistor 38, as well as to one end of the second resistor 49. The transistor 38 and the resistors 48-52 constitute the control stage of the battery charging circuit 47. The collector of the transistor 38 is connected, in turn, to a Darlington configured series of NPN junction transistors 39-42. The Darlington configured transistors 39-42 are selected so as to provide a relatively high current gain, for example, a current gain ($\beta_2$) of approximately 200,000, while the transistor 38 of the control stage is selected to also have in circuit a relatively high current gain ($\beta_1$), for example, a gain of about 100. The collectors of each of the transistors 39-42 are connected to the cathode of the rectifying diode 36. The base of the first of the transistors 39-42, that is the transistor 39, is connected to the collector of the transistor 38. The emitter of the final one of the Darlington-connected, current amplifying transistors 39-42, that is the transistor 42, is connected to the stationary contact 31 of the manually-operated switch 29 and to the emitter of the control transistor 38, via the fifth resistor 52. The battery charging circuit 47 illustrated in Fig. 3, is provided with external feedback between the output of the amplifier constituted by the Darlington circuit configured transistors 39-42 and the switching transistor 38 via the fifth resistor 51 which has its end not connected to the stationary contact 31 connected to that end of the first resistor 48 which is not connected to the base of the transistor 38. Additional internal feedback is provided, as in the embodiment illustrated in Fig. 2, by virtue of the third resistor 50 (resistor 35, Fig. 2) because of its coupling to the base of the transistor 38, as illustrated.

Again, by way of example only, typical values for circuit parameters of the battery charging circuit illustrated in Fig. 3, which could be used in an integrated circuit embodiment are:

$$R'_1 = 7{,}640 \text{ ohms}, \qquad i_a = .12 \text{ ampere (average)},$$
$$R'_2 = 102{,}740 \text{ ohms}, \qquad i_p = 5.0 \text{ ampere (peak)},$$
$$R'_3 = 53{,}440 \text{ ohms}, \qquad \beta_1 = 100 \text{ (current gain, control stage)},$$
$$R'_4 = 13{,}360 \text{ ohms}, \qquad \beta_2 = 200{,}000 \text{ (current gain, current amplifier)}.$$
$$R'_5 = .110 \text{ ohms},$$

As in the embodiment illustrated in Fig. 2, the individual values for the resistances $R'_1$ - $R'_4$ of the circuit illustrated in Fig. 3 can vary considerably, as a practical matter by about ± 20 percent, the exact values for resistances $R'_1$ - $R'_4$ not being as important as the ratios among them. The ratios of $R'_1 : R'_4$, $R'_2 : R'_4$ and $R'_3 : R_4$, in a practical case should desireably be within the range of substantially ± 5 percent and preferably substantially ± 1 percent. These criteria make it possible to realize the charging circuit of Fig. 3 as an integrated circuit using diffusion techniques, the same dimensional characteristics mentioned in conjunction with the embodiment illustrated in Fig. 2 applying equally well to this embodiment. Accordingly, expressing the above-mentioned ratios as constants $K'_1$, $K'_2$ and $K'_3$, respectively, we have

$$K'_1 = 0.57 \pm 0.03 = \frac{R'_1}{R'_4}, \quad K'_2 = 7.69 \pm 0.38 = \frac{R'_2}{R'_4},$$

and

$$K'_3 = 4.00 \pm 0.20 = \frac{R'_3}{R'_4};$$

or, as the prefered case is:

$K'_1 = 0.57 \pm 0.066$, $K'_2 = 7.69 \pm 0.076$, and $K'_3 = 4.00 \pm 0.04$.

The resistance $R'_5$ need not be in a particular ratio with respect to the other resistances and can easily be formed by metallization and be constituted by a metal contact to or between circuit points. As in the case of Fig. 2, the resistance $R_5$ is desirably, a positive temperature coeffecient (PTC) resistance, which increases in value as the temperature increases, thus limiting the current flow and serving to stabilize the circuit which in a practical integrated circuit version may operate at a chip temperature of about 125°C during battery charging when the chip is provided with a suitable thermal mounting. The PTC resistor 52 ($R'_5$) is preferably formed by metallization with materials which are selected so that the resistor will also function as a fuse, allowing the circuit to fail without damaging the battery undergoing charging and endangering the surroundings. Charging current will decrease with an increase in ambient temperature of approximately 1/4 percent per degree Fahrenheit, roughly matching the desired change in nickle-cadmium cell charging current with temperature.

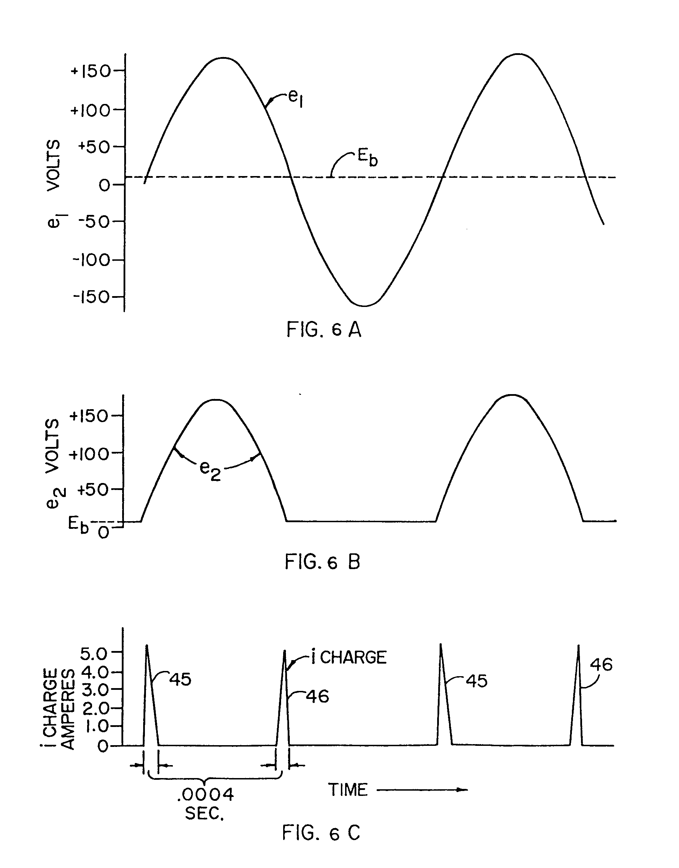

In operation, the respective circuit arrangements shown in Fig. 2 and Fig. 3 are placed in operation by connecting the charging circuit 19 (Fig. 2) or charging circuit 47 (Fig. 3) to the voltage source 22 which is shown as connected between the input terminals 20,21 of the charging circuit 19 or the charging circuit 47. The battery 24 to be charged is connected between the terminal 21 and the stationary contact 31 (its voltage being illustrated in Figs. 6A and 6B as $E_b$), via the movable contact 30, when this manually-operated switch 29 is in the position shown. Fig. 6A shows the voltage waveform $e_1$ as a function of time of the input source voltage 22 for a conventional 117 volt (rms), 60 Hz household outlet supply. Fig. 6B is a waveform $e_2$ of the rectified voltage at the output of the rectifier diode 36. The voltage waveforms as shown in Figs. 6A and 6B are illustrated for one and one-half cycles of the 60 Hz input. Fig. 6C is a corresponding waveform of the charging current $i_c$, during operation after the stable operating temperature of about 125°C has been reached, as indicated by the arrow 44 (Fig. 2) or arrow 53 (Fig. 3) shown in Fig. 2 through the fifth resistor 43 (Fig. 2) or resistor 52 (Fig. 3) and into the positive side of the battery 24. As can be seen in Fig. 6C, there are two current spikes 45, 46 for each cycle of A.C. input, the peak charging current $i_p$ being about 5.0 amperes. These current spikes 45, 46, as can be seen, are relatively short in duration, for example about .0004 seconds, resulting in an average charging current $i_a$ of about .12 ampere.

Referring again to Fig. 2 and Fig. 3, the diode 36 provides a source of input current for the Darlington configured current amplifier defined by the transistors 39-42, as well as operating voltage for the switching transistor 38 of the control stage. Initially, relatively high current spikes are produced, causing the PTC resistor 43 (Fig. 2) or the PTC resistor 52 (Fig. 3) to increase in value, because of heating thereof; resulting in the current spikes having lesser magnitudes as they approach the 5.0 ampere level and the chip achieves its stable operating temperature of about 125°C. Thereafter, when the A.C. voltage $e_1$ of the source 22 is positive and slightly greater, for example less than 2.6 volts with respect to the battery potential $E_b$ of the battery 24 which is to be recharged, the transistors 38 and 39-42 do not conduct. When the voltage difference reaches about 2.6 volts, battery charging current starts to flow through the transistors 39-42, illustrated as the leading edge of the current spike 45 in Fig. 6C. The current into the base of the transistor 39 in effect is amplified by the transistors 39-42 and initially flows at a relatively low level, through the fifth resistor 43 (Fig. 2) or the fifth resistor 52 (Fig. 3) into the battery thereby starting to charge the battery as the leading edge of the current spike 45 starts toward the 5.0 ampere level. This current, illustrated as current spike 45, can be considered to be increasing as the voltage supplied via the rectifying diode 36 becomes more positive and reaches its peak of about 5.0 amperes when the line voltage $e_1$ is about 10 volts greater than the battery voltage $E_b$. Increasing current is supplied not only to the Darlington connected transistors 39-42, but also to the base of the transistor 38, via the voltage divider consisting of the first resistor 33 (Fig. 2) or the first resistor 48 (Fig. 3), the second resistor 34 (Fig. 2) or the second resistor 49 (Fig. 3) and the third resistor 35 (Fig. 2) or the third resistor 50 (Fig. 3), which are connected in series, as pointed out above, between the diode 36 and the stationary contact 31 of the manually-operated switch 29. Once the current into the base of the transistor 38 is sufficient, when the line voltage $e_1$ reaches the level of about 10.0 volts greater than the battery voltage $E_b$, to turn this transistor on, considerable current starts to flow through the emitter-collector path thereof, reducing the voltage, and thus the current, supplied to the base of the transistor 39 causing the current amplifier, consisting of the transistors 39-42 connected in Darlington configuration, to exhibit reduced current flow, as illustrated by the trailing edge of the current spike 45 in Fig. 6C and quickly turn off the resulting current spike 45 having a duration of about .0004 second. The transistors 39-42 are turned off when the line voltage $e_1$ reaches a difference of about 27.6 volts with respect to battery voltage $E_b$. During this time period, because of the internal feedback provided as a result of the lowering of the voltage, at the point of connection between the second resistance 34 (Fig. 2) or the second resistance 49 (Fig. 3) and the third resistance 35 (Fig. 2) or the third resistance 50 (Fig. 3), the effective resistance of the transistor 38 increases. The transistors 39-42 are again turned on when the difference between the line voltage again reaches as it falls about 27.6 volts with respect to the battery voltage $E_b$ while the transistor 38 is conducting, with the result of the leading edge of the current spike 46 of Fig. 6C is produced, this current spike reaching a peak of about 5.0 amperes when the voltage difference between the voltage $e_1$ and the battery voltage $E_b$ again reaches about 10 volts. The transistors 39-42 remain conducting until the difference between the input voltage $e_1$ and the battery voltage $E_b$ again reaches about 2.6 volts. Thus current spike 46 of about 5.0 amperes and .0004 second duration is produced. These actions take place every other half cycle of the input voltage $e_1$ with the result that the two current spikes 45, 46 are produced, one at the starting portion and the other at the ending portion of each of these half cyles. Thus, a charging current spike is produced for a short period of time, for example, of about .0004 seconds as indicated above during an initial portion of the rectified half-wave voltage output $e_2$ from the rectifying diode 36 and another current spike 46 during its terminal portion, the spike 46 also having a duration of about .0004 seconds as indicated above. These actions take place time and time again providing, in effect, a charge in the form of current spikes to the battery 24 which continue until the battery is fully charged.

It is to be appreciated that were a 234 Volt, 60 $H_z$ source used instead of the 117 Volt 60 $H_z$ source (and if the effects of temperature changes within the circuit are ignored), the peak amplitude of current spikes 45, 46 (Figure 6C) would not change but the time duration of these current spikes and the average current would be halved. However, in practice, the operating temperature of the circuit at the higher source voltage would be less than when the source is 117 Volts, thereby decreasing the value of the PTC resistor 43 (Fig. 2) or resistor 52 (Fig. 3) and increasing the peak amplitude of the current spikes 45, 46. In addition, the lower circuit temperature would increase the gate-emitter threshold voltage of transistor 38 thereby tending to increase both the duration of the current spikes and the peak amplitudes of the current spikes. As a result of the lowered circuit temperature when the device is operated at higher source voltages, the reduction in average current is considerably less than would be the case if the circuit temperature were to remain constant.

In operation, the external feedback provided by the fifth resistor 52 (Fig. 3) as connected and the internal feedback provided by the third resistor 50 (Fig. 3) or the third resistor 35 (Fig. 2) as connected can be considered, in effect, to vary the resistance of the control stage and cause the transistor 38 to limit current flow in the transistor 39-42 to periods when relatively low voltages are present and to, in effect, turn the transistors 39-42 off during times higher voltages are present.

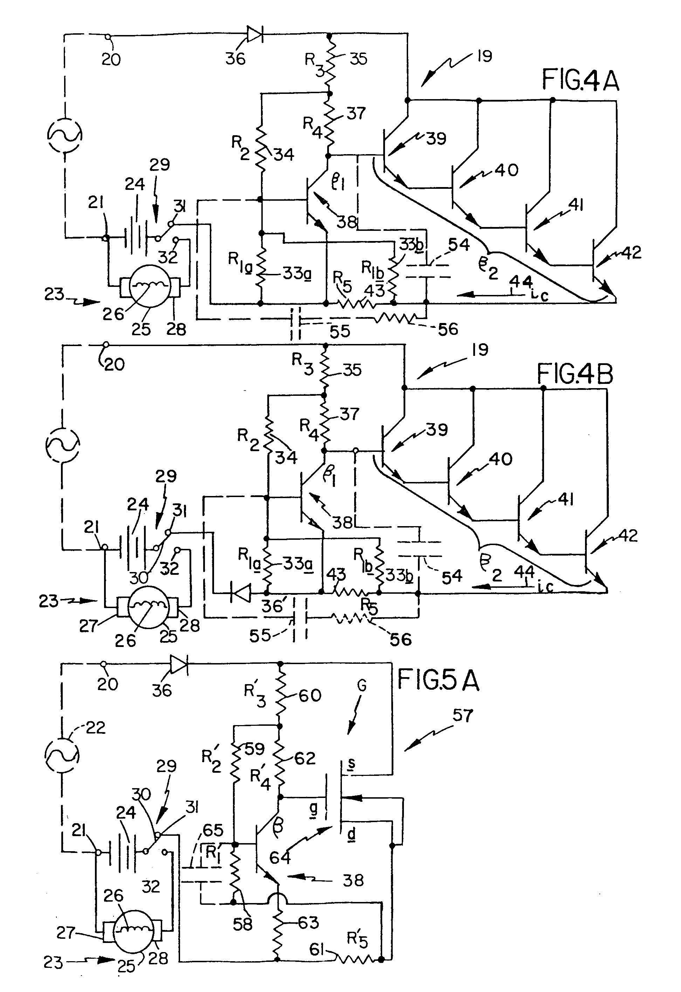

As illustrated in Figs. 4A and 4B, the illustrative, third embodiment of a charging circuit constructed in accordance with the present invention is very similar to the circuit of Fig. 2 and thus is also generally designated by the numeral 19 and includes a pair of terminals 20, 21 which are shown, for purposes of illustration, connected across a conventional, 117 volt 60 Hz voltage source 22. Also shown in Figs. 4A and 4B is an electric motor 23 and a motor-energizing battery 24. The motor 23 and the battery 24 may be identical to the motor 23 and battery 24 of Figs. 2 and 3. The battery charging circuit designated generally by the numeral 19 is connectable to the battery 24 by a single-pole, double-throw, manually operated switch 29 having a movable contact 30 for selective engagement with a stationary contact 31 which, when brought into contact with the movable contact 30 is illustrated, places the battery 24 in a recharging position. When the movable contact 30 is moved to engage its associated stationary contact 32, the battery charging circuit 19 is taken out of circuit with the battery 24, which is then in its "operate" position, the battery 24 energizing the motor 24.

The basic charging circuit 19, as illustrated in Figs. 4A and 4B, can be used to charge batteries from conventional 117 volt, and 234 volt 60 Hz power sources. It is to be appreciated, however, that the charging circuit illustrated in Figs. 4A and 4B can be utilized to charge rechargeable batteries of considerably different voltage levels from sources of different levels and/or supply frequencies, the above-mentioned levels and frequencies being set out by way of example only. The battery charging circuit 19 includes, a first resistor 33a (resistance $R_1a$) a second resistor 33b (resistance $R_1b$), a third resistor 34 (resistance $R_2$), a fourth resistor 35 (resistance $R_3$) and a rectifying diode 36 (Fig. 4A) the rectifying diode 36 having its anode connected to the terminal 20 and its cathode connected to one end of the resistor 35. The difference between the circuit variants illustrated in Figs. 4A and 4B in that in the variant shown in Fig. 4B the rectifying diode 36 has been replaced by rectifying diode 36' which is connected between the fixed contact 31 of the switch 29 and the emitter of the transistor 38. A fifth resistor 37 (resistance $R_4$) is connected between the connection point of the third resistor 34 and the fourth resistor 35 and the collector of an NPN transistor 38, which has its emitter connected to the stationary contact 31 of a manually operated switch 29 and to one end of the first resistor 33a. The other end of the first resistor 33a is connected to the base of the transistor 38, as well as to one end of the third resistor 34. The transistor 38 and resistors 33a, 33b, 34, 35 and 37 constitute the control stage of the battery charging circuit 19. As can be seen, the resistor 33 (Fig. 2) has in effect been replaced with resistors 33a and 33b. The collector of the transistor 38 is connected, in turn, to a current amplifier which includes a Darlington connected series of NPN junction transistors 39-42. The Darlington connected transistors are selected so as to provide a relatively high current gain, for example, a current gain ($\beta_2$) of approximately 200,000, while the control stage which includes the transistor 38 is selected to also have a current gain ($\beta_1$), for example, of about 100. The collectors of each of the transistors 39-42 are connected to the cathode of the rectifying diode 36 (Fig. 4A) or to the terminal 20 (Fig. 4B). The base of the first of the transistors 39-42, that is the transistor 39 is connected to the collector of the switching transistor 38. The emitter of the final one of the Darlington-connected transistors 39-42, that is the transistor 42, is connected to the stationary contact 31 of the manually-operated switch 29 and to the emitter of the transistor 38, via a current-limiting sixth resistor 43 ($R_5$). The current-limiting sixth resistor 43 is a positive temperature coefficient (PTC) resistance, formed by metallization from materials which are selected so that this resistor will also function as a fuse, allowing circuit failure without change to the battery undergoing recharging and endangering the surroundings. The battery charging circuit 19, as illustrated in Figs. 4A and 4B, is provided with external feedback between the output of the current amplifier constituted by the Darlington circuit configured transistors 39-42 and the switching transistor 38 by virtue of the connection of the resistor 33b between the base of the transistor 38 and the circuit point at which the resistor 43 and the emitter of the transistor 42 meet. Internal feedback is provided by the resistor 35 because of its coupling to the base of the transistor 38 via the resistor 34 and the first resistor 33a connected as illustrated. Hereinbelow, the first and second resistors 33a and 33b - (resistances $R_1a$ and $R_1b$) may be considered to be a single resistance (resistance $R_1$) constituted by resistors 33a and 33b connected in parallel.

By way of example only, typical values for circuit parameters of the battery charging circuit illustrated in Figs. 4A and 4B, which would be used in an exmplary integrated circuit embodiment are:

$$
\begin{aligned}
R_1 &= 8{,}946 \text{ ohms}, & 1_a &= .12 \text{ ampere (average)}, \\
R_2 &= 120{,}543 \text{ ohms}, & 1_p &= 5.0 \text{ ampere (peak)}, \\
R_3 &= 54{,}668 \text{ ohms}, & \beta_1 &= 100 \text{ (current gain,} \\
& & & \quad \text{control stage)}, \\
R_4 &= 13{,}667 \text{ ohms}, & \beta_2 &= 200{,}000 \text{ (current gain,} \\
R_5 &= .385 \text{ ohms}, & & \quad \text{current amplifier)}.
\end{aligned}
$$

It is to be appreciated that the individual values for the resistances $R_1$ - $R_4$ can vary considerably, as a practical matter by about ± 20 percent, the exact values for resistances $R_1$ - $R_4$ not being nearly as important as the ratios among them. The ratios of $R_1 : R_4$, $R_2 ; R_4$ and $R_3 ; R_4$, in a practical case, should desirably be within the range of substantially ± 5 percent and preferably substantially ± 1 percent. These criteria make it possible to realize the charging circuit of Figs. 4A and 4B as an integrated circuit using diffusion techniques. It is conceived that the integrated circuit, in an exemplary practical realization can be contained within a small housing preferably of cylindrical shape and having a length of about 3/16 inch and a diameter of about 5/36 inch. Two concentric wire leads each of about one inch can be provided to extend from the housing.

Accordingly, expressing the above-mentioned ratios as constants $K_1$, $K_2$ and $K_3$, respectively, we have:

$$
K_1 = 0.65 \pm 0.03 = \frac{R_1}{R_4}, \quad K_2 = 8.82 \pm 0.44 = \frac{R_2}{R_4},
$$

and

$$K_3 = 4.00 \overset{+}{-} 0.20 = \frac{R_3}{R_4};$$

or, as the preferred case is,
$K_1 = 0.65 \pm 0.006$, $K_2 = 8.82 \pm 0.088$ and $K_3 = 4.00 \pm 0.04$.

In some instances, a small capacitor 54 may be placed between the collector of the transistor 38 and the emitter of the transistor 42 and/or a series circuit which includes a small capacitor 55 and a resistor 56 may be placed between the base of the transistor 38 and the emitter of the transistor 42 for the purpose of reducing the possibility that the circuit would oscillate, the capacitors 54, 55 and the resistor 56, being shown with their connections as dashed lined to indicate that they need not be present.

The sixth resistance $R_5$ need not be in a particular ratio with respect to the other resistances and can readily be formed by metallization and be constitued by a metal contact to or between circuit points. The resistance $R_5$ is desirably a positive temperature coefficient (PTC) resistance, which increases in value as temperature increases, thus limiting current flow. The size of resistance $R_5$, relative to the sizes of resistances $R_1$ - $R_4$, is very small. The resistance $R_5$ acts to stabilize the battery charging circuit which, in a practical case, operates at a temperature of about 125°C during battery charging when the chip is provided with a suitable thermal mounting. Charging current will decrease with an increase in ambient temperature of approximately forty-five hundredths of one percent (0.45%) per degree Centrigrade, roughly matching the desired change in nickle-cadmium cell charging current with temperature.

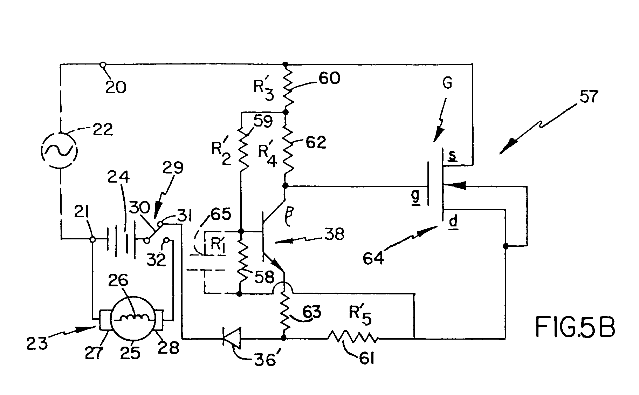

As illustrated in Figs. 5A and 5B, like reference numerals designating like circuit components as those in Figs. 4A and 5B, the illustrative, fourth embodiment and a variant thereof of a charging circuit constructed in accordance with the present invention is generally designated by the numeral 57 and includes a pair of terminals 20, 21 which are shown, for purposes of illustration, connected across a conventional, 117 volt, 60 Hz voltage source 22. Also shown in Figs. 5A and 5B is an electric motor 23 and a motor-energizing battery 24. The motor 23 and the battery 24 may be identical to the motor and battery of Figs. 2, 3, 4A and 4B. The battery charging circuit designated generally by the numeral 57 is connectable to the battery 24 by a single-pole, double-throw, manually operated switch 29 having a movably contact 30 for selective engagement with a stationary contact 31 which, when brought into contact with the movable contact 30 as illustrated, places the battery 24 in a recharging position. When the movable contact 30 is moved to engage its associated stationary contact 32, the battery charging circuit 50 is taken out of circuit with the battery 24, which is then in its "operate" position, the battery 24 energizing the motor 23.

The basic charging circuit 57, as illustrated in Figs. 5A and 5B, can be used to charge both 2.6 volt and 5.2 volt nickle-cadmium batteries from 177 volt, 60 Hz power supplies from 234 volt, 60 Hz power supplies. It is to be appreciated, however, that the charging circuit illustrated in Figs. 5A and 5B can be utilized to charge rechargeable batteries of considerably different voltage levels and itself have different levels and/or supply frequency, the above-mentioned levels and frequency being set out by way of example only. The battery charging circuit 57 includes a fifth resistor 61 (resistance $R'_5$), a first resistor 58 (resistance $R'_1$), a second resistor 59 (resistance $R'_2$) and a third resistor 60 (resistance $R'_3$), which is included to provide internal feedback, connected in series with a rectifying diode 36 (Fig. 5A), the terminal 20 and the contact 31 of the switch 29. The rectifying diode may be connected, as illustrated by rectifying diode 36' (Fig. 5B), between a stationary contact 31 of a switch 29 (Fig. 5B) and the resistor 61, the resistor 60 being connected to the terminal 20. A further resistor 63 is connected between the emitter of the transistor 38 and the fixed contact 31 of the switch 29, as shown in Fig. 5A or to anode of the rectifying diode 36', as shown in Fig. 5B. As illustrated, the rectifying diode 36 (Fig. 5A) has its anode connected to the terminal 20 and its cathode connected to one end of the third resistor 60. A fourth resistor 62 (resistance $R'_4$) is connected between the connection of the second resistor 59 and the third resistor 60 and the collector of the NPN transistor 38, which has its emitter connected to the stationary contact 31 of the manually operated switch 29, via the further resistor 63, and, via the fifth resistor 61, to one end of the first resistor 58, which has its other end connected to the base of the transistor 38, as well as to one end of the second resistor 59. The transistor 38 and the resistors 58-63 constitute the control stage of the battery charging circuit 57. The collector of the transistor 38 is connected, in turn, to the gate electrode (g) of a field-effect-transistor (FET), preferably a metal oxide, silicon field-effect-transistor (MOSFET) 64. The MOSFET 64 and its circuit components are selected so as to provide a relatively high transconductance (G) of approximately 2 mhos, while the transistor 38 of the control stage is selected to also have in circuit a relatively high current gain ($\beta$), for

example, a gain of about 100. The collector of the transistor 39 and the source electrode (s) of the MOSFET 64 are connected to the cathode of the rectifying diode 36 (Fig. 5A) or to the terminal 20 ($\overline{\text{Fig. 5B}}$). The gate electrode (g) of the MOSFET 64 is connected to the collector of the transistor 38. The drain electrode (d) of the MOSFET 64 is connected to the stationary contact 31 of the manually-operated switch 29 (Fig. 5A) or to the anode of the rectifying diode 36 (Fig. 5B) and to the emitter of the control transistor 38, via the fifth resistor 61). The battery charging circuit 57 illustrated in Figs. 5A and 5B, is provided with external feedback between the output of the amplifier constituted by the MOSFET 64 and the switching transistor 38 via the fifth resistor 61 which has its end not connected to the stationary contact 31 (Fig. 5A) or the anode of the diode 36' (Fig. 5B) connected to that end of the first resistor 58 which is not connected to the base of the transistor 38. Additional internal feedback is provided, as in the embodiment illustrated in Fig. 3 by virtue of the third resistor 60 (resistor 50, Fig. 3) because of its coupling to the base of the transistor 38, as illustrated.

Again, by way of example only, typical values for circuit parameters of the battery charging circuit illustrated in Figs. 5A and 5B, which could be used in an integrated circuit embodiment are:

$$
\begin{array}{lll}
R'_1 = & 3{,}900 \text{ ohms}, & i_a = .12 \text{ ampere (average)}, \\
R'_2 = & 100{,}000 \text{ ohms}, & i_p = 5.0 \text{ ampere (peak)}, \\
R'_3 = & 18{,}000 \text{ ohms}, & = 100 \text{ (current gain, control stage)}, \\
R'_4 = & 36{,}000 \text{ ohms}, & G = 2 \text{ mhos (transconductance of gain, MOSFET amplifier)}. \\
R'_5 = & .07 \text{ ohms}, & \\
R'_6 = & 270 \text{ ohms}, &
\end{array}
$$

As in the embodiment illustrated in Fig. 3, the individual values for the resistances $R'_1$ - $R'_4$ can vary considerably, as a practical matter by about ± 20 percent, the exact values for resistances $R'_1$ - $R'_4$ not being as important as the ratios among them. The ratios of $R'_1$; $R'_4$, $R'_2$; $R'_4$ and $R'_3$; $R_4$, in a practical case should desirably be within the range of substantially ± 5 percent and preferably substnatially ± 1 percent. These criteria make it possible to realize the charging circuits of Figs. 5A and 5B as an integrated circuits using diffusion techniques, the same dimensional characteristics mentioned in conjunction with the embodiments illustrated in the other figures applying equally well to this embodiment. Accordingly, expressing the above-mentioned ratios as constants $K'_1$, $K'_2$ and $K'_3$, respectively, we have

$$
K'_1 = 0.57 \pm 0.03 = \frac{R_1}{R_4}, \quad K'_2 = 7.69 \pm 0.38 = \frac{R_2}{R_4},
$$

and

$$
K'_3 = 4.00 \pm 0.20 = \frac{R_3}{R_4};
$$

or, as the preferred case is,
$K'_1 = 0.57 \pm 0.066$, $K'_2 = 7.69 \pm 0.076$ and $K'_3 = 4.00 \pm 0.04$.

The resistance $R'_5$ need not be in a particular ratio with respect to the other resistances and can easily be formed by metallization and be constituted by a metal contact to or between circuit points. As in the case of the other embodiments, the resistance $R'_5$ is desirably, a positive temperature coefficient (PTC) resistance, which increases in value as the temperature increases, thus limiting the current flow and serving to stabilize the circuit which in a practical integrated circuit version may operate at a chip temperature of about 125°C during battery charging when the chip is provided with a suitable thermal mounting. The PTC resistor 61 (R'$_5$) is preferably formed by metallization with materials which are selected so that the resistor will also function as a fuse, allowing the circuit to fail without damaging the battery undergoing charging and endangering the surroundings. Charging current will decrease with an increase in ambient temperature of approximately 1/4 percent per degree Fahrenheit, roughly matching the desired change in nickle-cadmium cell charging current with temperature.

The resistor 63 which is connected in series with the emitter of the transistor 38 need not be in any particular ratio relationship to the resistances R'$_1$ -R$_4$, its purposes being to provide an appropriate bias.

A 1200 $\rho$f capacitor 65 may be connected in parallel with the resistor 58 for the purpose of assuring that the circuit does not oscillate under some operating conditions.

The circuit arrangements shown in Figs. 4A, 4B, 5A and 5B are placed in operation and function substantially in the same fashion as the circuits illustrated in Figs. 2 and 3; consequently, the operational sequence need not be repeated in connection with Figs. 4A, 4B, 5A and 5B. In the case of the embodiment illustrated in Fig. 5A and the variant shown in Fig. 5B, the MOSFET 64 allows charging current to flow to the battery 24 is in form of current pulses 45, 46 (Fig. 6C), this transistor 64 being, in effect, turned ON and OFF at substantially the same voltage levels discussed above in relation to the embodiment shown in Fig. 3, the waveforms shown in Figs. 6A and 6B applying with equal relevance to the circuits of Figs 5A and 5B, albeit the transistor 64 is a voltage operating device, while the transistors 39-42 are considered to be current operating devices. It is to be appreciated that in each illustrated case, a field effect transistor may be substituted for the Darlington configured transistors.

**Claims**

1. A circuit for supplying charging current to a battery and which includes a rectifying circuit, having input and output terminals and being operatively arranged to provide an unfiltered rectified output, and a current regulating circuit connected in series with the battery and the two terminals of the rectifying circuit, and wherein the current regulating circuit includes a controlled current-carrying stage and a control stage, having a control electrode, a second electrode and a third electrode, operatively arranged to control conduction of the controlled stage in response to an input signal representative of the unfiltered rectified output from the rectifying circuit, in which the control stage (38, Figs. 2, 3, 4A, 4B, 5A, 5B) includes an internal negative feedback path which includes a resistive voltage divider (33-35, Fig. 2; 48-50, 52, Fig. 3; 33a, 33b, 34, 35, 43, Figs. 4A, 4B; 58-61, Figs. 5A,5B) extending in series with the battery (24) between the two terminals of the rectifying circuit (36, Figs. 2, 3, 4A, 5A; 36', Figs. 4B, 5B), one point on the voltage divider is connected to the control electrode (base of 38) of the control stage (38) and another point on the voltage divider is connected to the second electrode (collector of 38) of the control stage (38) via a resistance (37, Figs. 2, 4A, 4B,; 51, Fig. 3; 62, Figs. 5A, 5B) and allows the controlled stage to pass current to the battery during periods when the unfiltered output from the rectifying circuit is between a first level constituted by a voltage slightly higher than the battery voltage and a higher second level and to block current to the battery during periods when the unfiltered rectified output from the rectifying circuit is greater than the higher second level, characterized by the fact that the current regulating circuit (19, Figs. 2, 4A, 4B; 47, Fig. 3; 57, Figs. 5A, 5B) includes a positive temperature coefficient resistance (43, Figs. 2, 4A, 4B; 52, Fig. 3; 61, Figs. 5A, 5B) through which at least a major portion of current to the battery (24) flows via the controlled stage (39-42, Figs. 2, 3, 4A, 4B; 64, Figs. 5A, 5B) and which increases in value as temperature increases, limiting current flow to the battery.

2. A circuit according to claim 1, characterized by the fact that the resistance (43, Figs. 2, 4A, 4B; 52, Fig. 3; 61, Figs. 5A, 5B) through which at least a major portion of current to the battery (24) flows serves as a fuse for fail safe operation of the circuit.

3. A circuit according to either claims 1 or 2, characterized by the fact that the resistance (43, Figs. 2, 4A, 4B; 52, Fig. 3; 61, Figs. 5A, 5B) through which at least a major portion of current to the battery (24) flows is formed by metallization during integrated circuit manufacture or fabrication.

4. A circuit according to any preceding claim characterized by the fact that the current regulating circuit (19, Figs. 2, 4A, 4B) includes a first resistance (33, Fig. 2, 33a and 33b, Figs. 4A, 4B) a second resistance (34, Figs. 2, 4A, 4B) and a third resistance (35, Figs. 3, 4A, 4B) connected in series in the denominated order; the control stage includes a transistor (38) having its collector-emitter path connected in series with a series connection of a fourth resistance and having its base-emitter path connected in parallel with the first resistance; and the second resistance is connected between the base of the transistor (38) and a circuit point defined by a connection between the third resistance and the fourth resistance.

5. A circuit according to claim 4, characterized by the fact that relative sizes of the first resistance $R_1$ (33, Fig. 2; 33a, 33b, Figs. 4A, 4B) the second resistance $R_2$ (34, Figs. 3. 4A, 4B), the third resistance $R_3$ - (35, Figs. 3, 4A, 4B) and the fourth resistance $R_4$ (37) are defined as follows:

$R_1 = K_1 R_4$
$R_2 = K_2 R_4$
$R_3 = K_3 R_4$; where

$K_1 = .65 \pm .03$, $K_2 = 8.82 \pm .44$ and $K_3 = 4.00 \pm .20$.

6. A circuit according to claim 5, characterized by the fact that

$K_1 = .65 \pm 0.006$, $K_2 = 8.82 \pm 0.088$ and $K_3 = 4.00 \pm 0.040$.

7. A circuit according to claim 1, characterized by the fact that the current regulating circuit (47, Fig. 3, 57, Figs. 5A, 5B) includes a first resistance (48, Fig. 3, 58, Figs. 5A, 5B) , a second resistance (49, Fig. 3; 59, Figs. 5A, 5B) and a third resistance (50, Fig. 3; 60, Figs. 5A, 5B) connected in series in the denominated order; the control stage includes a transistor (38) having its collector-emitter path connected in series with a series connection of a fourth resistance (51, Fig. 3; 62, Figs. 5A, 5B) and the third resistance and having its base-emitter path connected in parallel with a series connection of said positive temperature coefficient resistance (52, Fig. 3; 61, Figs. 5A, 5B) and the first resistance, and the second resistance is connected between the base of the transistor and a circuit point between the third resistance and the fourth resistance.

8. A circuit according to claim 7, characterized by the fact that relative sizes of the first resistance $R'_1$ (48, Fig. 3; 58, Figs. 5A, 5B) the second resistance $R'_2$ (49, Fig. 3; 59, Figs. 5A, 5B) the third resistance $R'_3$ (50, Fig. 3; 60, Fig 5A, 5B) and the fourth resistance $R'_4$ (51, Fig. 3, 62, Figs. 5A, 5B) are defined as follows:

$R'_1 = K'_1 R'_4$
$R'_2 = K'_2 R'_4$
$R'_3 = K'_3 R'_4$; where

$K'_1 = .57 \pm .03$, $K'_2 = 7.69 \pm .38$ and $K'_3 = 4.00 \pm .20$.

9. A circuit according to claim 8, characterized by the fact that

$K'_1 = .57 \pm 0.006$, $K'_2 = 7.69 \pm 0.076$ and $K'_3 = 4.00 \pm .04$.

10. A circuit according to claim 1, characterized by the fact that the current regulating circuit (19, Figs. 4A, 4B) includes a given resistance (33a) and another given resistant (33a) providing in effect a first resistance (33a, 33b effectively connected in parallel), a second resistance (34) and a third resistance (35) connection in series in the denominated order; the control stage includes a transistor (38) having its collector-emitter path connected in series with a series connection of a fourth resistance (37) and the third resistance and having its base-emitter path connected in parallel with the given resistance (33a) and in parallel with a series connection of another given resistance, the resistance (33b) and said positive temperature coefficient resistance (43); and the second resistance is connected between the base of the transistor (38) and a circuit point between the third resistance and the fourth resistance.

11. A circuit according to claim 10, characterized by the fact that relative sizes of the first resistance $R_1$ - (33a, 33b) the second resistance $R_2$ (34), the third resistance $R_3$ (35) and the fourth resistance $R_4$ (37) are defined as follows:

$$R_1 = K_1 R_4$$
$$R_2 = K_2 R_4$$
$$R_3 = K_3 R_4 ; \text{ where}$$

$K_1 = .65 \pm .03$, $K_2 = 8.82 \pm .44$ and $K_3 = 4.00 \pm .20$.

**12.** A circuit according to claim 11, characterized by the fact that

$K_1 = .65 \pm 0.006$, $K_2 = 8.82 \pm 0.088$ and $K_3 = 4.00 \pm 0.040$.

**Revendications**

1. Circuit destiné à délivrer un courant de charge à une batterie et qui comporte un circuit redresseur, ayant des bornes d'entrée et de sortie et qui est prévu de manière opérationnelle pour délivrer une sortie redressée non filtrée, et un circuit de régulation de courant relié en série à la batterie et aux deux bornes du circuit redresseur, et dans lequel le circuit de régulation de courant comporte un étage de transport de courant commandé et un étage de commande, ayant une électrode de commande, une deuxième électrode et une troisième électrode, disposé de manière opérationnelle pour commander la conduction de l'étage commandé en réponse à un signal d'entrée représentatif de la sortie redressée non filtrée provenant du circuit redresseur, dans lequel l'étage de commande (38, figures 2, 3, 4A, 4B, 5A, 5B) comporte un passage de rétroaction négative interne qui comporte un diviseur de tension résistif (33 à 35, figure 2; 48 à 50, 52, figure 3; 33a, 33b, 34, 35, 43, figures 4A, 4B; 58 à 61, figures 5A, 5B) s'étendant en série avec la batterie (24) entre les deux bornes du circuit redresseur (36, figures 2, 3, 4A, 5A; 36' figures 4B, 5B), un point du diviseur de tension est relié à l'électrode de commande (base de 38) de l'étage de commande (38) et un autre point du diviseur de tension est relié à la deuxième électrode (collecteur de 38) en passant par une résistance (37, figures 2, 4A, 4B; 51, figure 3; 62, figures 5A, 5B) et permet à l'étage commandé de transmettre du courant à la batterie pendant des périodes où la sortie non filtrée du circuit redresseur est entre un premier niveau constitué par une tension légèrement plus élevée que la tension de la batterie et un deuxième niveau plus élevé et afin de bloquer le courant vers la batterie pendant des périodes où la sortie redressée non filtrée du circuit redresseur est supérieure au deuxième niveau plus élevé, caractérisé par le fait que le circuit de régulation de courant (19, figures 2, 4A, 4B; 47, figure 3; 57, figures 5A, 5B) comporte une résistance à coefficient de température positif (43, figures 2, 4A, 4B; 52, figure 3; 61, figures 5A, 5B) à travers laquelle passe au moins une majeure partie du courant vers la batterie (24) en passant par l'étage commandé (39 à 42, figures 2, 3, 4A, 4B; 64, figures 5A, 5B) et qui augmente de valeur lorsque la température augmente, limitant l'écoulement de courant vers la batterie.

2. Circuit selon la revendication 1, caractérisé par le fait que la résistance (43, figures 2, 4A, 4B; 52, figure 3; 61, figures 5A, 5B), à travers laquelle passe au moins une majeure partie du courant vers la batterie (24), sert de fusible pour un fonctionnement en toute sécurité du circuit.

3. Circuit selon la revendication 1 ou 2, caractérisé par le fait que la résistance (43, figures 2, 4A, 4B; 52, figure 3; 61, figures 5A, 5B), à travers laquelle passe au moins une majeure partie du courant vers la batterie (24), est formée par métallisation lors de la fabrication du circuit intégré.

4. Circuit selon l'une quelconque des revendications précédentes, caractérisé par le fait que le circuit de régulation de courant (19, figures 2, 4A, 4B) comporte une première résistance (33, figure 2; 33a et 33b, figures 4A, 4B), une deuxième résistance (34, figures 2, 4A, 4B), et une troisième résistance (35, figures 3, 4A, 4B) reliées en série dans l'ordre cité; l'étage de commande comporte un transistor (38) ayant son passage collecteur-émetteur relié en série à un branchement en série d'une quatrième résistance et ayant son passage base-émetteur relié en parallèle à la première résistance; et la deuxième résistance est reliée entre la base du transistor (38) et un point du circuit défini par un branchement entre la troisième résistance et la quatrième résistance.

5. Circuit selon la revendication 4, caractérisé par le fait que les tailles relatives de la première résistance $R_1$ (33, figure 2; 33a et 33b, figures 4A, 4B), de la deuxième résistance $R_2$ (34, figures 3, 4A, 4B), de la troisième résistance $R_3$ (35, figures 3, 4A, 4B) et de la quatrième résistance $R_4$ (37) sont définies comme suit :

15

$R_1 = K_1 R_4$
$R_2 = K_2 R_4$
$R_3 = K_3 R_4$ ; où

$K_1 = 0{,}65 \pm 0{,}3$, $K_2 = 8{,}82 \pm 0{,}44$ et $K_3 = 4{,}00 \pm 0{,}20$.

6. Circuit selon la revendication 5, caractérisé par le fait que $K_1 = 0{,}65 \pm 0{,}006$, $K_2 = 8{,}82 \pm 0{,}088$ et $K_3 = 4{,}00 \pm 0{,}040$.

7. Circuit selon la revendication 1, caractérisé par le fait que le circuit de régulation de courant (47, figure 3; 57, figures 5A, 5B) comporte une première résistance (48, figure 3; 58, figures 5A, 5B), une deuxième résistance (49, figure 3; 59, figures 5A, 5B), et une troisième résistance (50, figure 3; 60, figures 5A, 5B) reliées en série dans l'ordre cité; l'étage de commande comporte un transistor (38) ayant son passage collecteur-émetteur relié en série à un branchement en série d'une quatrième résistance (51, figure 3; 63, figures 5A, 5B) et de la troisième résistance et ayant son passage base-émetteur relié en parallèle à un branchement en série de la dite résistance à coefficient de température positif (52, figure 3; 61, figures 5A, 5B) et de la première résistance; et la deuxième résistance est reliée entre la base du transistor et un point du circuit entre la troisième résistance et la quatrième résistance.

8. Circuit selon la revendication 7, caractérisé par le fait que les tailles relatives de la première résistance $R'_1$ (48, figure 3; 58, figures 5A, 5B), de la deuxième résistance $R'_2$ (49, figure 3; 59, figures 5A, 5B), de la troisième résistance $R'_3$ (50, figure 3; 60, figures 5A, 5B) et de la quatrième résistance $R'_4$ (51, figure 3; 63, figures 5A, 5B) sont définies comme suit :

$R'_1 = K'_1 R'_4$
$R'_2 = K'_2 R'_4$
$R'_3 = K'_3 R'_4$ ; où

$K'_1 = 0{,}57 \pm 0{,}3$, $K'_2 = 7{,}69 \pm 0{,}38$ et $K'_3 = 4{,}00 \pm 0{,}20$.

9. Circuit selon la revendication 8, caractérisé par le fait que $K'_1 = 0{,}57 \pm 0{,}006$, $K'_2 = 7{,}69 \pm 0{,}076$ et $K'_3 = 4{,}00 \pm 0{,}04$.

10. Circuit selon la revendication 1, caractérisé par le fait que le circuit de régulation de courant (19, figures 4A, 4B) comporte une résistance donnée (33a) et une autre résistance donnée (33a) procurant en fait une première résistance (33a, 33b reliées de manière effective en parallèle), une deuxième résistance (34), et une troisième résistance (35) reliées en série dans l'ordre cité; l'étage de commande comporte un transistor (38) ayant son passage collecteur-émetteur relié en série à un branchement en série d'une quatrième résistance (37) et de la troisième résistance et ayant son passage base-émetteur relié en parallèle à la résistance donnée (33a) et en parallèle à un raccordement en série d'une autre résistance donnée, de la résistance (33b) et de la dite résistance à coefficient de température positif (43); et la deuxième résistance est reliée entre la base du transistor (38) et un point du circuit entre la troisième résistance et la quatrième résistance.

11. Circuit selon la revendication 10, caractérisé par le fait que les tailles relatives de la première résistance $R_1$ (33a, 33b), de la deuxième résistance $R_2$ (34), de la troisième résistance $R_3$ (35) et de la quatrième résistance $R_4$ (37) sont définies comme suit :

$R_1 = K_1 R_4$
$R_2 = K_2 R_4$
$R_3 = K_3 R_4$ ; où

$K_1 = 0{,}65 \pm 0{,}3$, $K_2 = 8{,}82 \pm 0{,}44$ et $K_3 = 4{,}00 \pm 0{,}20$.

12. Circuit selon la revendication 11, caractérisé par le fait que $K_1 = 0{,}65 \pm 0{,}006$, $K_2 = 8{,}82 \pm 0{,}088$ et $K_3 = 4{,}00 \pm 0{,}040$.

16

**Patentansprüche**

1. Schaltung zur Anlegung von Ladestrom an eine Batterie, die eine Gleichrichterschaltung mit Eingangs- und Ausgangsanschlüssen aufweist, welche im Betrieb einen ungefilterten gleichgerichteten Ausgang liefert, und eine Stromregelschaltung, welche mit der Batterie und den beiden Anschlüssen der Gleichrichterschaltung in Reihe geschaltet ist, und worin die Stromregelschaltung eine gesteuerte Stromträgerstufe und eine Steuerstufe mit einer Steuerelektrode, einer zweiten Elektrode und einer dritten Elektrode aufweist, die im Betrieb die Stromleitung der gesteuerten Stufe als Reaktion auf ein Eingangssignal steuern, welches den ungefilterten gleichgerichteten Ausgang von der Gleichrichterschaltung darstellt, wobei die Steuerstufe (38, Fign. 2, 3, 4A, 4B, 5A, 5B) eine interne negative Rückkopplungsstrecke aufweist, welche wiederum einen resistiven Spannungsteiler (33-35, Fig. 2; 48- 50, 52, Fig. 3; 33a, 33b, 34, 35, 43, Fign. 4A, 4B; 58-61, Fign. 5A, 5B) aufweist, der in Reihenschaltung mit der Batterie ($\overline{24}$) zwischen den zwei Anschlüssen der Gleichrichterschaltung (36, Fig. 2, 3, 4A, 5A; 36', Fig. 4B, 5B), verläuft, wobei ein Punkt auf dem Spannungsteiler mit der Steuerelektrode (Basis von 38) der Steuerstufe (38) verbunden ist und ein anderer Punkt auf dem Spannungsteiler mit der zweiten Elektrode (Kollektor von 38) der Steuerstufe (38) über einen Widerstand (37, Fign. 2, 4A, 4B; 51, Fig. 3; 62, Fign. 5A, 5B) verbunden ist und der gesteuerten Stufe ermöglicht, Strom zu den Zeiten an die Batterie zu legen, wenn der ungefilterte Ausgang von der Gleichrichterschaltung zwischen einem ersten Pegel, der von einer geringfügig größeren Spannung als die Batteriespannung gebildet wird, und einem höheren zweiten Pegel liegt, und Stromfluß an die Batterie zu den Zeiten zu sperren, wenn der ungefilterte gleichgerichtete Ausgang von der Gleichrichterschaltung höher ist als der höhere zweite Pegel, dadurch gekennzeichnet, daß die Stromregelschaltung (19, Fign. 2, 4A, 4B; 47, Fig. 3; 57, Fign. 5A, 5B) einen Widerstand mit positivem Temperaturkoeffizienten (43, Fign. 2, 4A, 4B; 52, Fig. 3; 61; Fign. 5A, 5B) aufweist, durch den mindestens ein Hauptanteil des Stromflusses an die Batterie (24) über die gesteuerte Stufe (39-42, Fign. 2, 3, 4A, 4B; 64, Fign. 5A, 5B) fließt und der mit steigender Temperatur in seinem Wert zunimmt, wodurch der Stromfluß an die Batterie begrenzt wird.

2. Schaltung nach Anspruch 1, dadurch gekennzeichnet, daß der Widerstand (43, Fign. 2, 4A, 4B; 52, Fig. 3; 61, Fign. 5A, 5B), durch den mindestens ein Hauptanteil des Stromes an die Batterie (24) fließt, als Sicherung für den störungsfreien Betrieb der Schaltung dient.

3. Schaltung nach Anspruch 1 oder 2, dadurch gekennzeichnet, daß der Widerstand (43, Fign. 2, 4A, 4B; 52, Fig. 3; 61, Fign. 5A, 5B), durch den mindestens ein Hauptanteil des Stromes an die Batterie (24) fließt, durch Metallisierung während der Herstellung oder Fabrikation der integrierten Schaltung gebildet wird.

4. Schaltung nach jedem der voranstehenden Ansprüche, dadurch gekennzeichnet, daß die Stromregelschaltung (19, Fign. 2, 4A, 4B) einen ersten Widerstand (33, Fig. 2, 33a und 33b, Fign. 4A, 4B), einen zweiten Widerstand (34, Fign. 2, 4A, 4B) und einen dritten Widerstand (35, Fign. 3, 4A, 4B) aufweist, die in Reihenschaltung in der angegebenen Folge verbunden sind; die Steuerstufe einen Transistor (38) aufweist, dessen Kollektor-Emitter-Strecke in Reihe mit einer Reihenschaltung eines vierten Widerstandes verbunden ist und dessen Basis-Emitter-Strecke parallel mit dem ersten Widerstand geschaltet ist; und der zweite Widerstand zwischen der Basis des Transistors (38) und einem Schaltungspunkt geschaltet ist, welcher von einer Verbindung zwischen dem dritten und dem vierten Widerstand definiert wird.

5. Schaltung nach Anspruch 4, dadurch gekennzeichnet, daß die relativen Größen des ersten Widerstan- des $R_1$ (33, Fig. 2; 33a, 33b, Fign. 4A, 4B), des zweiten Widerstandes $R_2$ (34, Fign. 3, 4A, 4B), des dritten Widerstandes $R_3$ (35, Fign. 3, 4A, 4B) und des vierten Widerstandes $R_4$ (37) wie folgt definiert sind:

$R_1 = K_1 R_4$

$R_2 = K_2 R_4$

$R_3 = K_3 R_4$; wobei

$K_1 = 0,65 \pm 0,03$, $K_2 = 8,82 \pm 0,44$ und $K_3 = 4,00 \pm 0,20$.

6. Schaltung nach Anspruch 5, dadurch gekennzeichnet, daß

EP 0 121 025 B1

$K_1 = 0,65 \pm 0,006$, $K_2 = 8,82 \pm 0,088$ und
$K_3 = 4,00 \pm 0,040$.

7. Schaltung nach Anspruch 1, dadurch gekennzeichnet, daß die Stromregelschaltung (47, Fig. 3, 57, Fign. 5A, 5B) einen ersten Widerstand (48, Fig. 3, 58, Fign. 5A, 5B), einen zweiten Widerstand (49, Fig. 3; 59, Fign. 5A, 5B) und einen dritten Widerstand (50, Fig. 3; 60, Fign. 5A, 5B) aufweist, die in Reihenschaltung in der angegebenen Folge geschaltet sind; die Steuerstufe einen Transistor (38) aufweist, dessen Kollektor-Emitter-Strecke in Reihe mit einer Reihenschaltung eines vierten Widerstandes (51, Fig. 3; 62, Fign. 5A, 5B) und dem dritten Widerstand verbunden ist und dessen Basis-Emitter-Strecke parallel mit einer Reihenschaltung des Widerstandes mit positivem Temperaturkoeffizienten (52, Fig. 3; 61, Fign. 5A, 5B) und dem ersten Widerstand verbunden ist, und der zweite Widerstand zwischen der Basis des Transistors und einem Schaltungspunkt zwischen dem dritten und dem vierten Widerstand geschaltet ist.

8. Schaltung nach Anspruch 7, dadurch gekennzeichnet, daß die relativen Größen des ersten Widerstandes $R'_1$ (48, Fig. 3; 58, Fign. 5A, 5B), des zweiten Widerstandes $R'_2$ (49, Fig. 3; 59, Fign. 5A, 5B), des dritten Widerstandes $R'_3$ (50, Fig. 3; 60; Fign. 5A, 5B) und des vierten Widerstandes $R'_4$ (51, Fig. 3, 62, Fign. 5A, 5B) wie folgt definiert sind:

$R'_1 = K'_1\, R'_4$
$R'_2 = K'_2\, R'_4$
$R'_3 = K'_3\, R'_4$; wobei

$K'_1 = 0,57 \pm 0,03$, $K'_2 = 7,69 \pm 0,38$ und
$K'_3 = 4,00 \pm 0,20$.

9. Schaltung nach Anspruch 8, dadurch gekennzeichnet, daß
$K'_1 = 0,57 \pm 0,006$, $K'_2 = 7,69 \pm 0,076$ und
$K'_3 = 4,00 \pm 0,04$.

10. Schaltung nach Anspruch 1, dadurch gekennzeichnet, daß die Stromregelschaltung (19, Fign. 4A, 4B) einen gegebenen Widerstand (33a) und einen weiteren gegebenen Widerstand (33a) aufweist, woraus sich eine Reihenschaltung aus einem ersten Widerstand (33a, 33b in Parallelschaltung), einem zweiten Widerstand (34) und einem dritter Widerstand (35) in dieser Folge ergibt; die Steuerstufe einen Transistor (38) aufweist, dessen Kollektor-Emitter-Strecke mit einer Reihenschaltung eines vierten Widerstandes (37) und des dritten Widerstandes in Reihe geschaltet ist und dessen Basis-Emitter-Strecke mit dem gegebenen Widerstand (33a) parallel geschaltet ist und parallel mit einer Reihenschaltung eines weiteren gegebenen Widerstandes, des Widerstands (33b) und des Widerstandes mit positivem Temperaturkoeffizienten (43) geschaltet ist; und der zweite Widerstand zwischen der Basis des Transistors (38) und einem Schaltungspunkt zwischen dem dritten Widerstand und dem vierten Widerstand geschaltet ist.

11. Schaltung nach Anspruch 10, dadurch gekennzeichnet, daß die relativen Größen des ersten Widerstandes $R_1$ (33a, 33b), des zweiten Widerstandes $R_2$ (34), des dritten Widerstandes $R_3$ (35) und des vierten Widerstandes $R_4$ (37) wie folgt definiert sind:

$R_1 = K_1\, R_4$
$R_2 = K_2\, R_4$
$R_3 = K_3\, R_4$; wobei

$K_1 = 0,65 \pm 0,03$, $K_2 = 8,82 \pm 0,44$ und
$K_3 = 4,00 \pm 0,20$.

12. Schaltung nach Anspruch 11, dadurch gekennzeichnet, daß
$K_1 = 0,65 \pm 0,006$, $K_2 = 8,82 \pm 0,088$ und
$K_3 = 4,00 \pm 0,040$.

18

FIG. 1

FIG. 2

FIG. 3

FIG.4A

FIG.4B

FIG.5A

FIG.5B

FIG. 6 A

FIG. 6 B

FIG. 6 C